# EUROPEAN PATENT APPLICATION

(11) **EP 4 379 832 A1**
(43) Date of publication of application: **05.06.2024**
(21) Application number: 22849081.9
(22) Date of filing: 23.06.2022
(51) Int. Cl.: H01M 4/13, H01M 4/36, H01M 4/525, H01M 4/62

(54) **POSITIVE ELECTRODE MATERIAL, POSITIVE ELECTRODE, AND BATTERY**

(30) Priority: 29.07.2021 JP 2021124830
(71) Applicant: Panasonic Intellectual Property Management Co., Ltd., Osaka-shi, Osaka 540-6207 (JP)
(72) Inventor: SUGIMOTO Yuta, Kadoma-shi, Osaka 571-0057 (JP); HASHIMOTO Kazuya, Kadoma-shi, Osaka 571-0057 (JP)
(74) Representative: Grünecker Patent- und Rechtsanwälte PartG mbB
(86) International application number: PCT/JP2022/025014
(87) International publication number: WO 2023/008006

(57) **Abstract**

A positive electrode active material 10 includes a positive electrode active material 100, a first solid electrolyte 101, and a second solid electrolyte 102. The first solid electrolyte 101 contains Li, Zr, M, and X. M is at least one selected from the group consisting of metalloid elements and metal elements other than Li. X is at least one selected from the group consisting of F, Cl, Br, and I. The second solid electrolyte 102 has a different composition than the first solid electrolyte 101. A ratio of a volume of the first solid electrolyte 101 to a total volume of the first solid electrolyte 101 and the second solid electrolyte 102 is greater than or equal to 3% and less than or equal to 60%.

## Description

### Technical Field

The present disclosure relates to a positive electrode material, a positive electrode, and a battery.

### Background Art

Patent Literature 1 discloses a method for producing an active material and a battery using the same. The method includes coating a positive electrode active material with an oxide-based solid electrolyte and, further, with a sulfide-based solid electrolyte.

### Citation List

### Patent Literature

PTL 1: Japanese Unexamined Patent Application Publication No. 2016-18735

### Summary of Invention

In the related art, there is a need for improving the safety of a battery.

A positive electrode material of the present disclosure includes a positive electrode active material, a first solid electrolyte, and a second solid electrolyte. The first solid electrolyte contains Li, Zr, M, and X. M is at least one selected from the group consisting of metalloid elements and metal elements other than Li. X is at least one selected from the group consisting of F, Cl, Br, and I. The second solid electrolyte has a different composition than the first solid electrolyte. A ratio of a volume of the first solid electrolyte to a total volume of the first solid electrolyte and the second solid electrolyte is greater than or equal to 3% and less than or equal to 60%.

The present disclosure can improve the safety of a battery.

### Brief Description of Drawings

[Fig. 1] Fig. 1 is a cross-sectional view illustrating a schematic configuration of a positive electrode material of a first embodiment.
[Fig. 2] Fig. 2 is a cross-sectional view illustrating a schematic configuration of a modification of the positive electrode material of the first embodiment.
[Fig. 3] Fig. 3 is a cross-sectional view illustrating a schematic configuration of a battery of a second embodiment.

### Description of Embodiments

### (Underlying Knowledge Forming Basis of the Present Disclosure)

Batteries that use a solid electrolyte are generally considered to be safe; however, this is not always true. For example, in some instances, oxygen is formed from a positive electrode active material. The formed oxygen oxidizes the solid electrolyte and increases a temperature of the battery. As a result, a casing holding the battery may suffer deterioration or damage, and a malfunction of the battery may occur. Accordingly, batteries that use a solid electrolyte are also desired to have improved safety.

### (Overview of Aspects of the Present Disclosure)

According to a first aspect of the present disclosure, a positive electrode material includes
a positive electrode active material;
a first solid electrolyte; and
a second solid electrolyte, in which
the first solid electrolyte contains Li, Zr, M, and X,
M is at least one selected from the group consisting of metalloid elements and metal elements other than Li,
X is at least one selected from the group consisting of F, Cl, Br, and I;
the second solid electrolyte has a different composition than the first solid electrolyte; and
a ratio of a volume of the first solid electrolyte to a total volume of the first solid electrolyte and the second solid electrolyte is greater than or equal to 3% and less than or equal to 60%.

The positive electrode material of the first aspect can improve the safety of a battery.

In a second aspect of the present disclosure, the positive electrode material according to the first aspect may be one in which, for example, the ratio of the volume of the first solid electrolyte to the total volume of the first solid electrolyte and the second solid electrolyte is greater than or equal to 3.3% and less than or equal to 50%. The positive electrode material of the second aspect can further improve the safety of a battery.

In a third aspect of the present disclosure, the positive electrode material according to the second aspect may be one in which, for example, the ratio of the volume of the first solid electrolyte to the total volume of the first solid electrolyte and the second solid electrolyte is greater than or equal to 6.7% and less than or equal to 50%. The positive electrode material of the third aspect can further improve the safety of a battery.

In a fourth aspect of the present disclosure, the positive electrode material according to the third aspect may be one in which, for example, the ratio of the volume of the first solid electrolyte to the total volume of the first solid electrolyte and the second solid electrolyte is greater than or equal to 33% and less than or equal to 50%. The positive electrode material of the fourth aspect can further improve the safety of a battery.

In a fifth aspect of the present disclosure, the positive electrode material according to the second aspect may be one in which, for example, the ratio of the volume of the first solid electrolyte to the total volume of the first solid electrolyte and the second solid electrolyte is greater than or equal to 3.3% and less than or equal to 8.0%. The positive electrode material of the fifth aspect can further improve the safety of a battery.

In a sixth aspect of the present disclosure, the positive electrode material according to any one of the first to fifth aspects may be one in which, for example, the second solid electrolyte contains Li and S. Sulfide solid electrolytes have high ionic conductivity and, therefore, can improve charge-discharge efficiency of a battery. On the other hand, sulfide solid electrolytes exhibit poor oxidation resistance in some cases. In instances where the second solid electrolyte that is included in a battery is a sulfide solid electrolyte, the technology of the present disclosure can be used to produce a superior effect in improving the safety of a battery.

In a seventh aspect of the present disclosure, the positive electrode material according to any one of the first to sixth aspects may be one in which, for example, M includes aluminum. In instances where M includes aluminum, the first solid electrolyte exhibits high ionic conductivity.

In an eighth aspect of the present disclosure, the positive electrode material according to any one of the first to seventh aspects may be one in which, for example, the first solid electrolyte is represented by Formula 1, shown below, where α, β, γ, and δ are each independently a value greater than 0. In instances where a halide solid electrolyte represented by Formula 1 is used in a battery, power characteristics of the battery can be improved.

Li_{α}Zr_{β}M_{γ}X_{δ} (1)

In a ninth aspect of the present disclosure, the positive electrode active material according to any one of the first to eighth aspects may, for example, include a coating layer on at least a portion of a surface of the positive electrode active material. With this configuration, the charge-discharge efficiency of a battery can be improved.

In a tenth aspect of the present disclosure, the positive electrode material according to the ninth aspect may be one in which, for example, the coating layer contains an oxide solid electrolyte having lithium ion conductivity. In instances where an oxide solid electrolyte is used in the coating layer, the charge-discharge efficiency of a battery can be further improved.

In an eleventh aspect of the present disclosure, the positive electrode material according to the ninth or tenth aspect may be one in which, for example, the coating layer contains lithium niobate. With this configuration, the charge-discharge efficiency of a battery can be improved.

According to a twelfth aspect of the present disclosure, a positive electrode includes the positive electrode material according to any one of the first to eleventh aspects. With this configuration, the safety of a battery can be improved.

According to a thirteenth aspect of the present disclosure, a battery includes the positive electrode according to the twelfth aspect. The present disclosure can improve the safety of a battery.

Embodiments of the present disclosure will be described below with reference to the drawings. The present disclosure is not limited to the embodiments described below.

### (First Embodiment)

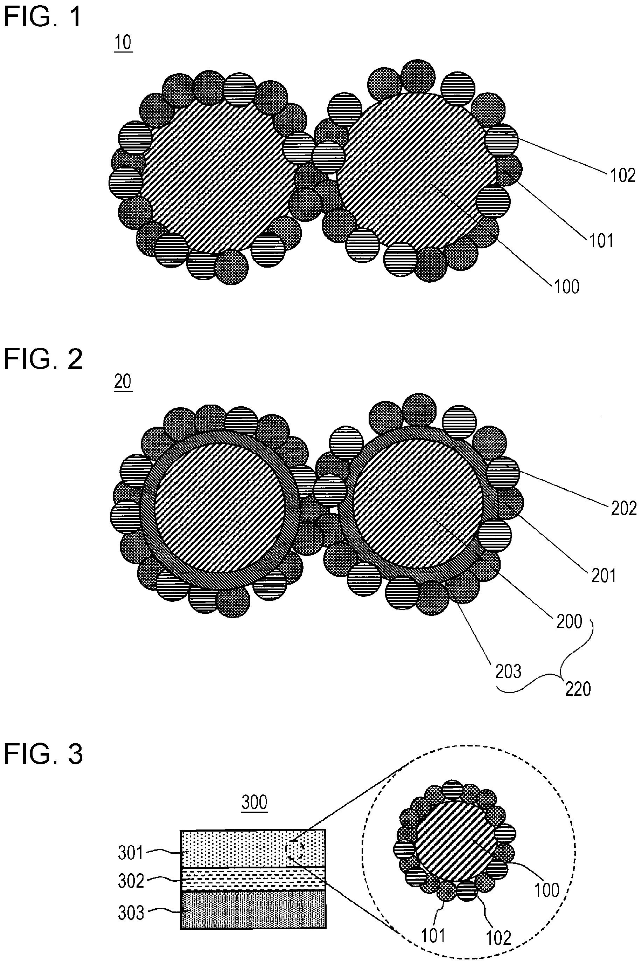

Fig. 1 is a cross-sectional view illustrating a schematic configuration of a positive electrode material of a first embodiment. A positive electrode material 10 includes a positive electrode active material 100, a first solid electrolyte 101, and a second solid electrolyte 102.

The first solid electrolyte contains Li, Zr, M, and X. M is at least one selected from the group consisting of metalloid elements and metal elements other than Li or Zr. X is at least one selected from the group consisting of F, Cl, Br, and I. In the positive electrode material 10, a ratio V1/Vt, which is a ratio of V1 to Vt, is greater than or equal to 3% and less than or equal to 60%, as expressed in percentage, where V1 is a volume of the first solid electrolyte, and Vt is a total volume of the first solid electrolyte 101 and the second solid electrolyte 102.

The "metalloid elements" include B, Si, Ge, As, Sb, and Te.

The "metal elements" include all the elements other than hydrogen from Groups 1 to 12 of the periodic table and all the elements other than B, Si, Ge, As, Sb, Te, C, N, P, O, S, or Se from Groups 13 to 16 of the periodic table. That is, the metal elements are elements that can become a cation in instances in which any of the elements forms an inorganic compound with a halogen element.

The first solid electrolyte may be a solid electrolyte containing a halogen, that is, a so-called halide solid electrolyte. Halide solid electrolytes have excellent oxidation resistance. Accordingly, the mixing of the first solid electrolyte can inhibit oxidation of a positive electrode (e.g., oxidation of the second solid electrolyte). Consequently, a battery that uses the positive electrode material 10 is inhibited from generating heat, and as a result, the battery that uses the positive electrode material 10 can have improved safety.

When the ratio V1/Vt is excessively low, the inhibition of oxidation reactions between the positive electrode active material 100 and the second solid electrolyte due to the first solid electrolyte is insufficient, and, consequently, the above-described effect may not be sufficiently produced. The ratio V1/Vt may be greater than or equal to 3.3%, greater than or equal to 6%, or greater than or equal to 6.7%. When the ratio V1/Vt is excessively high, there is a concern that the positive electrode material 10 may not have sufficient ionic conductivity. The ratio V1/Vt may be desirably less than or equal to 50% or less than or equal to 40%.

The ratio V1/Vt may be, for example, greater than or equal to 3.3% and less than or equal to 50% so as to improve the safety of a battery.

The ratio V1/Vt may be greater than or equal to 6.7% and less than or equal to 50% or greater than or equal to 33% and less than or equal to 50% so as to further improve the safety of a battery.

The ratio V1/Vt may be greater than or equal to 3.3% and less than or equal to 8.0% so as to further improve the safety of a battery.

The total volume Vt of the first solid electrolyte 101 and the second solid electrolyte 102 is a sum of the volume V1 of the first solid electrolyte 101 and a volume V2 of the second solid electrolyte 102. The volume V1 of the first solid electrolyte 101 is a total volume of the first solid electrolyte 101 in a powder of the positive electrode material 10. The volume V2 of the second solid electrolyte 102 is a total volume of the second solid electrolyte 102 in the powder of the positive electrode material 10. That is, the ratio V1/Vt is a value determined based on an entirety of a specific amount of the powder of the positive electrode material 10.

The ratio V1/Vt can be calculated from amounts of charge of the materials or can be calculated in the following manner. Specifically, a cross section of a positive electrode that uses the positive electrode material 10 is examined with a scanning electron microscope (SEM-EDX), and two-dimensional elemental mapping images are acquired. Measurement conditions for the scanning electron microscope used to acquire the two-dimensional mapping images include, for example, a magnification of 1000× to 3000× and an acceleration voltage of 5 kV. The two-dimensional mapping images are acquired at a resolution of 1280×960. The volume of the positive electrode active material 100, the volume V1 of the first solid electrolyte 101, and the volume V2 of the second solid electrolyte 102 can be determined by analyzing the two-dimensional elemental mapping images and using the number of pixels corresponding to the elements present in the positive electrode active material 100, the first solid electrolyte 101, and the second solid electrolyte 102.

In the positive electrode material 10, a ratio "v1:(100 - v1)", which is a ratio between a volume of the positive electrode active material 100 and a volume of the solid electrolytes, may satisfy 30 ≤ v1 ≤ 95. When 30 ≤ v1 is satisfied, a sufficient energy density of a battery is ensured. When v1 ≤ 95 is satisfied, a high-power operation of a battery can be achieved. The volume of the solid electrolytes is the total volume of the first solid electrolyte 101 and the second solid electrolyte 102.

### <Positive Electrode Active Material>

The positive electrode active material 100 includes a material that has a property of occluding and releasing metal ions (e.g., lithium ions). Examples of the positive electrode active material 100 include lithium transition metal oxides, transition metal fluorides, polyanionic materials, fluorinated polyanionic materials, transition metal sulfides, transition metal oxysulfides, and transition metal oxynitrides. In particular, in instances where a lithium transition metal oxide is used as the positive electrode active material 100, the cost of production of a battery can be reduced, and an average discharge voltage of the battery can be increased. Examples of the lithium transition metal oxides include Li(Ni,Co,Al)O₂, Li(Ni,Co,Mn)O₂, and LiCoO₂.

The positive electrode active material 100 has a shape of particles, for example. The shape of the particles of the positive electrode active material 100 is not particularly limited. The shape of the particles of the positive electrode active material 100 may be a spherical shape, an ellipsoidal shape, a flake shape, or a fiber shape.

The positive electrode active material 100 may have a median diameter of greater than or equal to 0.1 µm and less than or equal to 100 µm. When the median diameter of the positive electrode active material 100 is greater than or equal to 0.1 µm, the positive electrode active material 100, the first solid electrolyte 101, and the second solid electrolyte 102 can form a favorable state of dispersion in the positive electrode material 10. As a result, charge-discharge characteristics of a battery are improved. When the median diameter of the positive electrode active material 100 is less than or equal to 100 µm, a sufficient lithium diffusion rate is ensured in the positive electrode active material 100. Consequently, a high-power operation of a battery can be achieved.

The median diameter of the positive electrode active material 100 may be greater than the median diameter of the first solid electrolyte 101 and the median diameter of the second solid electrolyte 102. In this case, the positive electrode active material 100, the first solid electrolyte 101, and the second solid electrolyte 102 can form a favorable state of dispersion.

In this specification, the "median diameter" is a particle diameter corresponding to a cumulative volume of 50% in a volume-based particle size distribution. The volume-based particle size distribution is measured, for example, with a laser diffraction analyzer or an image analyzer.

### <First Solid Electrolyte>

The first solid electrolyte 101 has an ionic conductivity, for example. Typically, the ionic conductivity is a lithium ion conductivity. Raw materials for the first solid electrolyte 101, by-products that are formed during the preparation of the first solid electrolyte 101, and the like are included in incidental impurities. A ratio of a mass of the incidental impurities to a total mass of the first solid electrolyte 101 may be less than or equal to 5%, less than or equal to 3%, less than or equal to 1%, or less than or equal to 0.5%.

The first solid electrolyte 101 is a material containing Li, Zr, M, and X. M and X are as described above. Such materials have excellent ionic conductivity and oxidation resistance. Accordingly, a battery that uses the positive electrode material including the first solid electrolyte 101 has improved charge-discharge efficiency of the battery and improved thermal stability of the battery.

The halide solid electrolyte that serves as the first solid electrolyte 101 is, for example, represented by Formula 1, shown below. In Formula 1, α, β, γ, and δ are each independently a value greater than 0.

Li_{α}Zr_{β}M_{γ}X_{δ} (1)

Halide solid electrolytes represented by Formula 1 have higher ionic conductivity than halide solid electrolytes formed only of Li and a halogen element, such as LiI. Accordingly, in instances where a halide solid electrolyte represented by Formula 1 is used in a battery, the charge-discharge efficiency of the battery can be improved.

M may include Al (=aluminum). That is, the metal element that is included in the halide solid electrolyte may be Al. In instances where M includes Al, the halide solid electrolyte exhibits high ionic conductivity.

The halide solid electrolyte may consist essentially of Li, Zr, Al, and X. "The halide solid electrolyte consists essentially of Li, Zr, Al, and X" means that a ratio of a total of the amounts of substance (i.e., a molar fraction) of Li, Zr, Al, and X to a total of the amounts of substance of all the elements that form the halide solid electrolyte is greater than or equal to 90%. For example, the molar ratio (i.e., molar fraction) may be greater than or equal to 95%. The halide solid electrolyte may consist only of Li, Zr, Al, and X.

In the halide solid electrolyte, a ratio of the amount of substance of Li to a total of the amounts of substance of Zr and Al may be greater than or equal to 1.12 and less than or equal to 5.07 so that the ionic conductivity of the solid electrolyte can be further increased.

The halide solid electrolyte may be represented by Formula 2, shown below.

Li_{6-(4-x)b}(Zr₁₋ₓAlₓ)_{b}F₆ (2)

In Formula 2, inequalities of 0 < x < 1 and 0 < b ≤ 1.5 are satisfied. Such halide solid electrolytes have high ionic conductivity.

In Formula 2, an inequality of 0.01 ≤ x ≤ 0.99 may be satisfied so that the ionic conductivity of the halide solid electrolyte can be increased. Desirably, an inequality of 0.2 ≤ x ≤ 0.95 may be satisfied.

In Formula 2, the upper limit and the lower limit of the range of x may be defined by any combination of values selected from 0.01, 0.2, 0.4, 0.5, 0.5, 0.7, 0.8, 0.95, and 0.99.

In Formula 2, an inequality of 0.7 ≤ b ≤ 1.3 may be satisfied so that the ionic conductivity of the halide solid electrolyte can be increased. Desirably, an inequality of 0.9 ≤ b ≤ 1.04 may be satisfied.

In Formula 2, the upper limit and the lower limit of the range of b may be defined by any combination of values selected from 0.7, 0.8, 0.9, 0.96, 1, 1.04, 1.1, 1.2, and 1.3.

The halide solid electrolyte may be crystalline or amorphous.

The halide solid electrolyte may have any shape. Examples of the shape include needle shapes, spherical shapes, and ellipsoidal shapes. The halide solid electrolyte may be particles.

When the shape of the halide solid electrolyte is, for example, a particle shape (e.g., a spherical shape), the solid electrolyte may have a median diameter of greater than or equal to 0.1 µm and less than or equal to 100 µm. The "median diameter" is a particle diameter corresponding to a cumulative volume of 50% in a volume-based particle size distribution. The volume-based particle size distribution is measured, for example, with a laser diffraction analyzer or an image analyzer.

The halide solid electrolyte may be a sulfur-free solid electrolyte. In this instance, the formation of a sulfur-containing gas, such as a hydrogen sulfide gas, from the solid electrolyte can be avoided. The "sulfur-free solid electrolyte" is a solid electrolyte that is represented by a formula that does not include the sulfur element. Accordingly, solid electrolytes containing a very small amount of sulfur, for example, solid electrolytes having a sulfur content of less than or equal to 0.1 mass%, are classified into the "sulfur-free solid electrolyte". The halide solid electrolyte may contain an additional anion, in addition to the anion of the halogen element. The additional anion may be that of oxygen.

### <Method for Producing Halide Solid Electrolyte>

The halide solid electrolyte that serves as the first solid electrolyte can be produced, for example, in the following manner.

Raw material powders are prepared and mixed together such that a target composition can be achieved. The raw material powders may be those of halides, for example.

For example, when Li_{2.64}Zr_{0.48}Al_{0.48}F₆ is the target composition, LiF, ZrF₄, and AlF₃ are to be mixed together in a molar ratio of approximately 2.64:0.48:0.48. The raw material powders may be mixed together in a pre-adjusted molar ratio such that a compositional change that can occur in a synthesis process can be offset.

The raw material powders are reacted with one another mechanochemically (i.e., with a mechanochemical milling method) in a mixing device, such as a planetary ball mill, to give a reaction product. The reaction product may be heat-treated in a vacuum or in an inert atmosphere. Alternatively, a mixture of the raw material powders may be heat-treated in a vacuum or in an inert atmosphere to give a reaction product. Preferably, the heat treatment is performed, for example, at a temperature of greater than or equal to 100°C and less than or equal to 400°C for 1 hour or more. Preferably, the raw material powders are heat-treated in a sealed vessel, such as a quartz tube, so that a compositional change due to the heat treatment can be inhibited.

The halide solid electrolyte can be produced with any of these methods.

### <Second Solid Electrolyte>

The second solid electrolyte 102 may include at least one selected from the group consisting of halide solid electrolytes, sulfide solid electrolytes, oxide solid electrolytes, polymeric solid electrolytes, and complex hydride solid electrolytes.

Examples of the halide solid electrolytes include the above-described materials of the first solid electrolyte 101. Note, however, that the second solid electrolyte 102 has a different composition than the first solid electrolyte 101. The "different composition" means a composition in which the constituent elements are different from those of another or a composition in which the constituent elements are the same, but ratios of the constituent elements are different from those of another.

Oxide solid electrolytes are solid electrolytes containing oxygen. The oxide solid electrolyte may contain an additional anion, in addition to the oxygen anion. The additional anion may be an anion other than that of sulfur or those of halogen elements.

Examples of the oxide solid electrolytes include NASICON-type solid electrolytes, typified by LiTi₂(PO₄)₃ and element-substituted derivatives thereof; (LaLi)TiO₃-system perovskite-type solid electrolytes; LISICON-type solid electrolytes, typified by Li₁₄ZnGe₄O₁₆, Li₄SiO₄, LiGeO₄, and element-substituted derivatives thereof; garnet-type solid electrolytes, typified by Li₇La₃Zr₂O₁₂ and element-substituted derivatives thereof; Li₃PO₄ and N-substituted derivatives thereof; and glass or glass-ceramics including a Li-B-O compound-containing base material and one or more additional materials, in which examples of the Li-B-O compound include LiBO₂ and Li₃BO₃, and examples of the additional materials include Li₂SO₄ and Li₂CO₃.

Examples of the polymeric solid electrolytes include a compound of a polymeric compound and a lithium salt. The polymeric compound may have an ethylene oxide structure. Polymeric compounds having an ethylene oxide structure can contain large amounts of a lithium salt. Accordingly, the ionic conductivity can be further increased. Examples of the lithium salt include LiPF₆, LiBF₄, LiSbF₆, LiAsF₆, LiSO₃CF₃, LiN(SO₂F)₂, LiN(SO₂CF₃)₂, LiN(SO₂C₂F₅)₂, LiN(SO₂CF₃)(SO₂C₄F₉), and LiC(SO₂CF₃)₃. One lithium salt selected from these may be used alone, or a mixture of two or more lithium salts selected from these may be used.

Examples of the complex hydride solid electrolytes include LiBH₄-LiI and LiBH₄-P₂S₅.

The second solid electrolyte 102 may contain Li and S. In other words, the second solid electrolyte 102 may contain a sulfide solid electrolyte. Sulfide solid electrolytes have high ionic conductivity and, therefore, can improve the charge-discharge efficiency of a battery. On the other hand, sulfide solid electrolytes exhibit poor oxidation resistance in some cases. In the instance where the second solid electrolyte 102 that is included in a battery is a sulfide solid electrolyte, the technology of the present disclosure can be used to produce a superior effect.

Examples of the sulfide solid electrolytes include Li₂S-P₂S₅, Li₂S-SiS₂, Li₂S-B₂S₃, Li₂S-GeS₂, Li_{3.25}Ge_{0.25}P_{0.75}S₄, and Li₁₀GeP₂S_{12.} To any of these, LiX, Li₂O, MO_{q}, LiₚMO_{q}, and/or the like may be added. In the LiX, X is at least one selected from the group consisting of F, Cl, Br, and I. In the MO_{q} and LiₚMO_{q}, the element M is at least one selected from the group consisting of P, Si, Ge, B, Al, Ga, In, Fe, and Zn. In the MO_{q} and LiₚMO_{q}, p and q are each independently a natural number.

The second solid electrolyte 102 may include two or more of the above-mentioned materials of solid electrolytes. For example, the second solid electrolyte 102 may include a halide solid electrolyte and a sulfide solid electrolyte.

The second solid electrolyte 102 may have a lithium ion conductivity higher than a lithium ion conductivity of the first solid electrolyte 101.

The second solid electrolyte 102 may contain incidental impurities, such as starting materials used in the synthesis of the solid electrolyte, by-products, and decomposition products. The same applies to the first solid electrolyte 101.

### <Other Materials>

A binding agent may be included in the positive electrode material 10 to improve adhesion between particles. The binding agent is used to improve the binding properties of the materials that form the positive electrode. Examples of the binding agent include polyvinylidene fluoride, polytetrafluoroethylene, polyethylene, polypropylene, aramid resins, polyamides, polyimides, polyamide-imides, polyacrylonitrile, polyacrylic acids, poly(methyl acrylate), poly(ethyl acrylate), poly(hexyl acrylate), polymethacrylic acids, poly(methyl methacrylate), poly(ethyl methacrylate), poly(hexyl methacrylate), polyvinyl acetate, polyvinylpyrrolidone, polyethers, polycarbonates, polyether sulfones, polyetherketones, polyetheretherketones, polyphenylene sulfides, hexafluoropolypropylene, styrene butadiene rubber, carboxymethyl cellulose, and ethyl cellulose. The binding agent may be a copolymer of two or more monomers selected from the group consisting of tetrafluoroethylene, hexafluoroethylene, hexafluoropropylene, perfluoroalkyl vinyl ether, vinylidene fluoride, chlorotrifluoroethylene, ethylene, propylene, butadiene, styrene, pentafluoropropylene, fluoromethyl vinyl ether, acrylic acid esters, acrylic acids, and hexadiene. One of those mentioned may be used alone, or two or more of those mentioned may be used in combination.

The binding agent may be an elastomer because elastomers have excellent binding properties. Elastomers are polymers having rubber elasticity. The elastomer for use as a binding agent may be a thermoplastic elastomer or a thermosetting elastomer. The binding agent may include a thermoplastic elastomer. Examples of the thermoplastic elastomer include styrene-ethylene-butylene-styrene (SEBS), styrene-ethylene-propylene-styrene (SEPS), styrene-ethylene-ethylene-propylene-styrene (SEEPS), butylene rubbers (BR), isoprene rubbers (IR), chloroprene rubbers (CR), acrylonitrile-butadiene rubbers (NBR), styrene-butylene rubbers (SBR), styrene-butadiene-styrene (SBS), styrene-isoprene-styrene (SIS), hydrogenated isoprene rubbers (HIR), hydrogenated butyl rubbers (HIIR), hydrogenated nitrile rubbers (HNBR), hydrogenated styrene-butylene rubber (HSBR), polyvinylidene fluoride (PVdF), and polytetrafluoroethylene (PTFE). One of these may be used alone, or two or more of these may be used in combination.

A conductive additive may be included in the positive electrode material 10 to enhance electron conductivity. Examples of the conductive additive include graphites, such as natural graphite and artificial graphite; carbon blacks, such as acetylene black and Ketjen black; conductive fibers, such as carbon fibers and metal fibers; carbon fluoride; metal powders, such as aluminum powders; conductive whiskers, such as zinc oxide whiskers and potassium titanate whiskers; conductive metal oxides, such as titanium oxide; and conductive polymers, such as polyaniline, polypyrrole, and polythiophene. In instances where a conductive carbon additive is used, cost reduction can be achieved.

### <Method for Producing Positive Electrode Material>

The positive electrode material 10 can be prepared by mixing the positive electrode active material 100, the first solid electrolyte 101, and the second solid electrolyte 102 together. Methods for mixing the positive electrode active material 100, the first solid electrolyte 101, and the second solid electrolyte 102 together are not particularly limited. The positive electrode active material 100, the first solid electrolyte 101, and the second solid electrolyte 102 may be mixed together in a device, such as a mortar, or the positive electrode active material 100, the first solid electrolyte 101, and the second solid electrolyte 102 may be mixed together in a mixer, such as a ball mill.

### (Modification)

Fig. 2 is a cross-sectional view illustrating a schematic configuration of a modification of the positive electrode material of the first embodiment. In this modification, the positive electrode active material is a coated active material including a coating layer on at least a portion of a surface of the positive electrode active material. Specifically, a positive electrode material 20 includes a coated active material 220, a first solid electrolyte 201, and a second solid electrolyte 202. The coated active material 220 includes a positive electrode active material 200 and a coating layer 203.

The coating layer 203 may contain a material having low electron conductivity, such as an oxide material or an oxide solid electrolyte.

Examples of the oxide material include SiO₂, Al₂O₃, TiO₂, B₂O₃, Nb₂O₅, WO₃, and ZrO₂. Examples of the oxide solid electrolyte include Li-Nb-O compounds, such as LiNbO₃; Li-B-O compounds, such as LiBO₂ and Li₃BO₃; Li-Al-O compounds, such as LiAlO₂; Li-Si-O compounds, such as Li₄SiO₄; Li₂SO₄; Li-Ti-O compounds, such as Li₄Ti₅O₁₂; Li-Zr-O compounds, such as Li₂ZrO₃; Li-Mo-O compounds, such as Li₂MoO₃; Li-V-O compounds, such as LiV₂O₅; and Li-W-O compounds, such as Li₂WO₄. The base material may be one of these or a mixture of two or more of these.

The coating layer 203 may be a solid electrolyte having lithium ion conductivity. Typically, the coating layer 203 is an oxide solid electrolyte having lithium ion conductivity. Oxide solid electrolytes have high ionic conductivity and excellent high-potential stability. In the instance where an oxide solid electrolyte is used in the coating layer 203, the charge-discharge efficiency of a battery can be improved.

A material of the coating layer 203 may be a material containing Nb. Typically, the coating layer 203 contains lithium niobate (LiNbO₃). With this configuration, the charge-discharge efficiency of a battery can be improved. The oxide solid electrolyte that serves as the material of the coating layer 203 may be any of the materials described above.

The coating layer 203 has a thickness of, for example, greater than or equal to 1 nm and less than or equal to 500 nm. In the instance where the thickness of the coating layer 203 is appropriately adjusted, contact between the positive electrode active material 200 and the second solid electrolyte 202 can be sufficiently inhibited.

The thickness of the coating layer 203 can be determined as follows: a thin specimen is prepared from the coated active material 220 with a method such as ion milling, and a cross section of the coated active material 220 is examined with a transmission electron microscope. A thickness is measured at several random positions (e.g., five points), and an average of the thicknesses can be taken as the thickness of the coating layer 203.

The coated active material 220 can be produced in the following manner.

First, the coating layer 203 is formed on a surface of the positive electrode active material 200. Methods for forming the coating layer 203 are not particularly limited. Examples of the methods for forming the coating layer 203 include liquid-phase coating methods and vapor-phase coating methods.

For example, a liquid-phase coating method is as follows. A precursor solution of the base material is applied to the surface of the positive electrode active material 100. In instances where a coating layer 203 containing LiNbO₃ is to be formed, the precursor solution may be a mixed solution (sol solution) of a solvent, a lithium alkoxide, and a niobium alkoxide. Examples of the lithium alkoxide include lithium ethoxide. Examples of the niobium alkoxide include niobium ethoxide. Examples of the solvent include alcohols, such as ethanol. Amounts of the lithium alkoxide and the niobium alkoxide are to be adjusted in accordance with a target composition of the coating layer 203. If necessary, water may be added to the precursor solution. The precursor solution may be acidic or alkaline.

Methods for applying the precursor solution to the surface of the positive electrode active material 200 are not particularly limited. For example, the precursor solution can be applied to the surface of the positive electrode active material 200 in a tumbling fluidized bed granulating-coating machine. The tumbling fluidized bed granulating-coating machine can apply the precursor solution to the surface of the positive electrode active material 200 by spraying the precursor solution onto the positive electrode active material 200 while tumbling and fluidizing the positive electrode active material 200. Accordingly, a precursor coating is formed on the surface of the positive electrode active material 200. Subsequently, the positive electrode active material 200 coated with the precursor coating is heat-treated. The heat treatment causes the gelation of the precursor coating to proceed, which leads to the formation of the coating layer 203.

Examples of the vapor-phase coating methods include pulsed laser deposition (PLD) methods, vacuum vapor deposition methods, sputtering methods, thermal chemical vapor deposition (CVD) methods, and plasma chemical vapor deposition methods. The PLD methods are carried out, for example, as follows. A high-energy pulsed laser (e.g., a KrF excimer laser, wavelength: 248 nm) is applied onto an ion-conducting material used as a target, to cause the sublimed ion-conducting material to be deposited onto the surface of the positive electrode active material 100. In instances where a second coating layer 103 of LiNbO₃ is to be formed, the target to be used is densely sintered LiNbO₃.

Note that the method for forming the coating layer 203 is not limited to the methods mentioned above. The coating layer 203 may be formed with any of a variety of methods, such as a spray method, a spray-dry coating method, an electrodeposition method, a dipping method, and a mechanical mixing method that uses a dispersing machine.

### (Second Embodiment)

Fig. 3 is a cross-sectional view illustrating a schematic configuration of a battery of a second embodiment. A battery 300 includes a positive electrode 301, a separator layer 302, and a negative electrode 303. The separator layer 302 is disposed between the positive electrode 301 and the negative electrode 303. The positive electrode 301 includes at least one of the positive electrode material 10 and the positive electrode material 20, which are described above in the first embodiment. With this configuration, the battery 300 can have improved safety.

The positive electrode 301 and the negative electrode 303 may each have a thickness of greater than or equal to 10 µm and less than or equal to 500 µm. When the thicknesses of the positive electrode 301 and the negative electrode 303 are greater than or equal to 10 µm, a sufficient energy density of the battery can be ensured. When the thicknesses of the positive electrode 301 and the negative electrode 303 are less than or equal to 500 µm, a high-power operation of the battery 300 can be achieved.

The separator layer 302 is a layer containing an electrolyte material. The separator layer 302 may include at least one solid electrolyte selected from the group consisting of sulfide solid electrolytes, oxide solid electrolytes, halide solid electrolytes, polymeric solid electrolytes, and complex hydride solid electrolytes. Details of the solid electrolytes are as described in the first embodiment.

The separator layer 302 may have a thickness of greater than or equal to 1 µm and less than or equal to 300 µm. When the thickness of the separator layer 302 is greater than or equal to 1 µm, the positive electrode 301 and the negative electrode 303 can be separated from each other more reliably. When the thickness of the separator layer 302 is less than or equal to 300 µm, a high-power operation of the battery 300 can be achieved.

The negative electrode 303 includes a negative electrode active material that is a material having a property of occluding and releasing metal ions (e.g., lithium ions).

Examples of the negative electrode active material include metal materials, carbon materials, oxides, nitrides, tin compounds, and silicon compounds. The metal materials may be elemental metals. The metal materials may be alloys. Examples of the metal materials include lithium metals and lithium alloys. Examples of the carbon materials include natural graphite, coke, partially graphitized carbon, carbon fibers, spherical carbon, artificial graphite, and amorphous carbon. Silicon (Si), tin (Sn), a silicon compound, a tin compound, or the like may be used; these are suitable from the standpoint of a capacity density.

Particles of the negative electrode active material may have a median diameter of greater than or equal to 0.1 µm and less than or equal to 100 µm.

The negative electrode 303 may include one or more additional materials, such as a solid electrolyte. The solid electrolyte may be any of the materials described in the first embodiment.

### EXAMPLES

Details of the present disclosure will now be described with reference to Examples and a Comparative Example. Note that positive electrode materials and batteries of the present disclosure are not limited to the Examples described below.

### <Example 1>

### [Preparation of Coated Active Material]

In an argon glove box, 5.95 g of lithium ethoxide (manufactured by Koujundo Chemical Laboratory Co., Ltd.) and 36.43 g of niobium pentaethoxide (manufactured by Koujundo Chemical Laboratory Co., Ltd.) were dissolved in 500 mL of super-dehydrated ethanol (manufactured by FUJIFILM Wako Pure Chemical Corporation) to form a coating solution.

A powder of Li(Ni,Co,Al)O₂ (hereinafter denoted as "NCA") was prepared to be used as the positive electrode active material. The process of forming a coating layer of LiNbOs on a surface of the NCA was performed with a tumbling fluidized bed granulating-coating machine (FD-MP-01E, manufactured by Powrex Corporation). The amount of NCA charged was 1 kg, a stirring speed was 400 rpm, and a pumping rate for the coating solution was 6.59 g/minute. The amount of the coating solution to be charged was adjusted such that the thickness of LiNbOs could be 10 nm. The amount of the coating solution to be charged was calculated from the specific surface area of the active material and a density of the LiNbOs. The series of steps in the tumbling fluidized bed granulating-coating machine were carried out in a dry atmosphere having a dew point of -30°C or less. After the process of forming a coating layer of LiNbOs was completed, the resulting powder was placed into an alumina crucible and heat-treated under the conditions of an air atmosphere, 300°C, and 1 hour. The heat-treated powders were reground in an agate mortar. In this manner, NCA having a coating layer of LiNbOs was prepared. The coating layer was made of lithium niobate (LiNbOs). The NCA having a coating layer of LiNbOs is hereinafter denoted as "Nb-NCA".

### [Preparation of First Solid Electrolyte]

In an argon glove box with a dew point of -60°C or less, raw material powders of LiF, ZrF₄, and AlF₃ were weighed such that a molar ratio of LiF:ZrF₄:AlF₃ = 2.5:0.5:0.5 was achieved. These were ground and mixed in a mortar to form a mixture. The resulting mixture was subjected to a milling process, which was performed in a planetary ball mill at 500 rpm for 12 hours. In this manner, a powder of a halide solid electrolyte of Example 1 was prepared. The first solid electrolyte of Example 1 had a composition represented by Li_{2.5}Zr_{0.5}Al_{0.5}F₆ (hereinafter denoted as "LZAF").

### [Preparation of Second Solid Electrolyte]

In an argon glove box with a dew point of -60°C or less, raw material powders of Li₂S and P₂S₅ were weighed such that a molar ratio of Li₂S:P₂S₅ = 75:25 was achieved. These were ground and mixed in an agate mortar to form a mixture. Subsequently, the mixture was subjected to a milling process in a planetary ball mill (P-7 model, manufactured by Fritsch) under the conditions of 10 hours and 510 rpm. In this manner, a glassy solid electrolyte was prepared. The glassy solid electrolyte was heat-treated in an inert atmosphere under the conditions of 270°C and 2 hours. In this manner, Li₂S-P₂S₅ (hereinafter denoted as "LPS") that was a glass-ceramic solid electrolyte was prepared.

### [Preparation of Positive Electrode Material]

In an argon glove box, the positive electrode active material, the LZAF, and the LPS of Example 1 were weighed such that a volume ratio between the Nb-NCA and the solid electrolytes (i.e., Nb-NCA:solid electrolytes) of 70:30, and a volume ratio between the first solid electrolyte (i.e., LZAF) and the second solid electrolyte (i.e., LPS) (i.e., LZAF:LPS) of 6.7:93.3 were achieved. These were mixed in an agate mortar to give a positive electrode material of Example 1. Regarding the volume ratio between the Nb-NCA and the solid electrolytes, the "solid electrolytes" means the total volume of the LZAF and the LPS.

### <Example 2>

A positive electrode material of Example 2 was prepared as in Example 1, except that the volume ratio between the LZAF and the LPS (i.e., LZAF:LPS) was changed to 15:75.

### <Example 3>

A positive electrode material of Example 3 was prepared as in Example 1, except that the volume ratio between the LZAF and the LPS (i.e., LZAF:LPS) was changed to 23.3:76.7.

### <Example 4>

A positive electrode material of Example 4 was prepared as in Example 1, except that the volume ratio between the LZAF and the LPS (i.e., LZAF:LPS) was changed to 33.3:66.7.

### <Example 5>

A positive electrode material of Example 5 was prepared as in Example 1, except that the volume ratio between the LZAF and the LPS (i.e., LZAF:LPS) was changed to 50:50.

### <Comparative Example 1>

A positive electrode material of Comparative Example 1 was prepared by using only the second solid electrolyte, that is, using only the LPS, as a solid electrolyte, without using the LZAF that was a first solid electrolyte.

In the positive electrode materials of the Examples and the Comparative Example, the ratio of the volume of the LZAF to the total volume of the LZAF and the LPS was as shown in Table 1.

### [Preparation of Battery]

The positive electrode material was weighed such that 14 mg of the Nb-NCA was present therein. In an insulating cylinder, the LPS and the positive electrode material were stacked in the order stated. The resulting multilayer body was pressure-molded at a pressure of 720 MPa. Next, lithium metal was placed in contact with the LPS layer, and the resultant was pressure-molded again at a pressure of 40 MPa. In this manner, a multilayer body formed of a positive electrode, a solid electrolyte layer, and a negative electrode was prepared. Next, a stainless steel current collector was placed on upper and lower sides of the multilayer body. A current collector lead was attached to each of the current collectors. Next, the cylinder was sealed with an insulating ferrule to isolate the interior of the cylinder from the ambient environment. By performing these steps, batteries of Examples 1 to 6 and Comparative Example 1 were produced. The batteries were each constrained with four bolts from upper and lower sides to apply an interface pressure of 150 MPa to the batteries.

### [Preparation of Thermal Analysis Samples]

The batteries were placed in a constant-temperature chamber at 25°C. The batteries were charged at a constant current of 147 µA, which was a current value corresponding to a 0.05 C rate (20 hour rate) with respect to a theoretical capacity of the batteries, until a voltage of 4.3 V was reached. The batteries were charged at a constant voltage of 4.3 V until a current value of 2.9 µA was reached.

The batteries in a charged state were disassembled in an argon glove box, and only the positive electrode materials were taken out. 2 mg of each of the positive electrode materials was sealed in a stainless steel closed pan. In this manner, thermal analysis samples of Examples 1 to 5 and Comparative Example 1 were prepared.

### [Performing of Thermal Analysis]

A thermal analysis was performed on the thermal analysis samples of Examples 1 to 5 and Comparative Example 1 under the following conditions.

The thermal analysis was carried out with a differential scanning calorimeter (Q1000, manufactured by TA Instruments). A heating condition was 10°C/minute over a range of 0°C to 400°C. In a thermal analysis curve, the temperature at which a peak occurred was considered to be an exotherm onset temperature. The results are shown in Table 1.

**[Table 1]**

| | LZAF/Nb-NCA (vol%) | LZAF/(LZAF+LPS) (vol%) | Exotherm onset temperature (°C) |
|---|---|---|---|
| Example 1 | 2 | 6.7 | 197.71 |
| Example 2 | 4.6 | 15 | 192.86 |
| Example 3 | 7 | 23.3 | 191.09 |
| Example 4 | 10 | 33.3 | 196.04 |
| Example 5 | 15 | 50 | 196.04 |
| Comparative Example 1 | 0 | 0 | 182.90 |

### <Discussion>

As shown in Table 1, regarding the positive electrode materials, the ratio V1/Vt, which is a ratio of V1 to Vt, was within the range of greater than or equal to 3% and less than or equal to 60% in the batteries of Examples 1 to 5, where V1 is the volume of the first solid electrolyte, and Vt is the total volume of the first solid electrolyte and the second solid electrolyte; these batteries had higher exotherm onset temperatures than the battery of Comparative Example 1. That is, it was demonstrated that in the instance where the positive electrode material includes the first solid electrolyte in a volume within the above-mentioned range, a reaction between oxygen released from the positive electrode active material and the sulfide solid electrolyte is inhibited, and, consequently, the safety of a battery is improved.

It is speculated that when the volume of the LZAF is less than 1% relative to the volume of the Nb-NCA, inhibiting the release of oxygen from the positive electrode active material is difficult. Accordingly, it is desirable that the ratio of the volume of the LZAF to the volume of the Nb-NCA be greater than or equal to 1%. The upper limit of the ratio of the volume of the LZAF to the volume of the Nb-NCA is, for example, 15%.

### Industrial Applicability

The technology of the present disclosure is useful, for example, in an all-solid-state lithium secondary battery.

### Reference Signs List

10, 20 positive electrode material
100, 200 positive electrode active material
101, 201 first solid electrolyte
102, 202 second solid electrolyte
203 coating layer
220 coated active material
300 battery
301 positive electrode
302 separator layer
303 negative electrode

## Claims

1. A positive electrode material comprising:
a positive electrode active material;
a first solid electrolyte; and
a second solid electrolyte, wherein
the first solid electrolyte contains Li, Zr, M, and X,
M is at least one selected from the group consisting of metalloid elements and metal elements other than Li,
X is at least one selected from the group consisting of F, Cl, Br, and I;
the second solid electrolyte has a different composition than the first solid electrolyte; and
a ratio of a volume of the first solid electrolyte to a total volume of the first solid electrolyte and the second solid electrolyte is greater than or equal to 3% and less than or equal to 60%.

2. The positive electrode material according to claim 1, wherein the ratio of the volume of the first solid electrolyte to the total volume of the first solid electrolyte and the second solid electrolyte is greater than or equal to 3.3% and less than or equal to 50%.

3. The positive electrode material according to claim 2, wherein the ratio of the volume of the first solid electrolyte to the total volume of the first solid electrolyte and the second solid electrolyte is greater than or equal to 6.7% and less than or equal to 50%.

4. The positive electrode material according to claim 3, wherein the ratio of the volume of the first solid electrolyte to the total volume of the first solid electrolyte and the second solid electrolyte is greater than or equal to 33% and less than or equal to 50%.

5. The positive electrode material according to claim 2, wherein the ratio of the volume of the first solid electrolyte to the total volume of the first solid electrolyte and the second solid electrolyte is greater than or equal to 3.3% and less than or equal to 8.0%.

6. The positive electrode material according to any one of claims 1 to 5, wherein the second solid electrolyte contains Li and S.

7. The positive electrode material according to any one of claims 1 to 6, wherein M includes aluminum.

8. The positive electrode material according to any one of claims 1 to 7, wherein the first solid electrolyte is represented by Formula 1:
Li_{α}Zr_{β}M_{γ}X_{δ} (1)
where α, β, γ, and δ are each independently a value greater than 0.

9. The positive electrode material according to any one of claims 1 to 8, wherein the positive electrode active material includes a coating layer on at least a portion of a surface of the positive electrode active material.

10. The positive electrode material according to claim 9, wherein the coating layer contains an oxide solid electrolyte having lithium ion conductivity.

11. The positive electrode material according to claim 9 or 10, wherein the coating layer contains lithium niobate.

12. A positive electrode comprising the positive electrode material according to any one of claims 1 to 11.

13. A battery comprising the positive electrode according to claim 12.
